(19) Europäisches Patentamt
European Patent Office
Office européen des brevets

(11) Veröffentlichungsnummer: **0 292 762 A2**

# (12) EUROPÄISCHE PATENTANMELDUNG

(21) Anmeldenummer: **88107355.5**

(51) Int. Cl.⁴: **C09D 3/72**

(22) Anmeldetag: **07.05.88**

(30) Priorität: **29.05.87 DE 3718102**

(43) Veröffentlichungstag der Anmeldung:
**30.11.88 Patentblatt 88/48**

(84) Benannte Vertragsstaaten:
**AT BE CH DE ES FR GB GR IT LI LU NL SE**

(71) Anmelder: **Teroson GmbH**
**Hans-Bunte-Strasse 4**
**D-6900 Heidelberg 1(DE)**

(72) Erfinder: **Lucke, Heinz**
**Heidelberger Strasse 58**
**D-6915 Dossenheim(DE)**

(74) Vertreter: **UEXKÜLL & STOLBERG**
**Patentanwälte**
**Beselerstrasse 4**
**D-2000 Hamburg 52(DE)**

## (54) Flüssige, lösungsmittelfreie airless- und druckluftspritzbare, härtbare Polyurethan-Öl-Weichmacher-Einkomponenten-Zusammensetzung, Verfahren zu deren Herstellung und deren Verwendung.

(57) Es wird eine flüssige, lösungsmittelfreie, airless- und druckluftspritzbare, härtbare Polyurethan-Öl-Weichmacher-Einkomponenten-Zusammensetzung beschrieben, deren Vorteilhaftigkeit auf einer permanenten Plastifizierung des Polyurethans mit einem trocknenden und/oder halbtrocknenden Öl und Verdünnung mit einem geeigneten Weichmacher basiert. Die wesentlichen Vorteile der beschriebenen Zusammensetzung bestehen in der Kalthärtbarkeit und der Lösungsmittelfreiheit. Sie eignen sich insbesondere als Beschichtungsmassen wie Unterbodenschutzmassen, Nahtabdichtungsmittel und Steinschlagschutzmassen, als Beschichtungsmaterial für den Dachbereich oder zur Herstellung von schalldämpfenden Schaumstoffen.

EP 0 292 762 A2

# Flüssige, lösungsmittelfreie, airless- und druckluftspritzbare, härtbare Polyurethan-Öl-Weichmacher-Einkomponenten-Zusammensetzung, Verfahren zu deren Herstellung und deren Verwendung

Die Erfindung betrifft eine flüssige, härtbare Polyurethan-Öl-Weichmacher-Einkomponenten-Zusammensetzung, ein Verfahren zu deren Herstellung sowie deren Verwendung.

Beschichtungsmassen wie Unterbodenschutzmassen, Nahtabdichtungsmittel oder Steinschlagschutzmassen werden in einkomponentiger Form (als 1K-System) entweder lösungsmittelhaltig auf der Basis von Wachs-, Bitumen-Wachs- oder Bitumen-Elastomer-Lösungen oder lösungsmittelfrei auf der Basis von PVC- oder Polyacrylat-Weichmacher-Plastisolen hergestellt und appliziert. Die lösungsmittelhaltigen einkomponentigen Beschichtungsmassen trocknen physikalisch durch Verdunsten der Lösungsmittel und weisen meist sehr geringe Abriebwerte auf. Die lösungsmittelfreien einkomponentigen Beschichtungsmassen müssen nach ihrer Applizierung in einem bestimmten Zeit-/Temperaturverhältnis (z.B. 20 bis 30 Min./140-180 °C) thermisch ausgehärtet bzw. geliert werden.

Sowohl die lösungsmittelhaltigen als auch die lösungsmittelfreien Beschichtungsmassen werden üblicherweise auf entsprechend vorbehandelte, d.h. entfettete und phosphatierte und anschließend noch entsprechend lackierte (z.B. anaphoretisch oder kataphoretisch tauchlackierte, sogenannte Ec-grundierte) Stahlblech-Karosserien z.B. mit Hilfe von Airless- oder Sekundär-Luft-Spritzverfahren kalt appliziert und zwar in Schichtstärken von üblicherweise 100 bis 1000 µm in Abhängigkeit davon, ob es sich um Unterbodenschutzmassen, Nahtabdichtungsmittel oder Steinschlagschutzmassen handelt.

Die in dieser Weise aufgebrachten lösungsmittelfreien Beschichtungsmassen werden anschließend zusammen mit den aufgebrachten Lackschichten in den Lackieröfen heiß eingebrannt.

Die lösungsmittelhaltigen Beschichtungsmassen, die vielfach mit leicht flüchtigen, brennbaren und/oder toxischen Lösungsmitteln wie z.B. Siedegrenzen-Benzine 100/140, Testbenzine, Toluol, Xylol, Ethylglykol, Butylacetat, Methoxypropylenacetat, Propylencarbonat usw. sowie Gemischen dieser Stoffe hergestellt sind, trocknen allmählich physikalisch durch Verdunsten der Lösungsmittel. Ein Schalldämpfung durch eine gleichmäßige Aufschäumung ist bei diesen kalthärtenden Systemen bisher nicht möglich gewesen.

In den letzten Jahren sind eine ganze Reihe von neuen Beschichtungsmassen auf anderen Rohstoffbasen für den Automobilsektor entwickelt worden, die insbesondere als Unterbodenschutzmassen, Nahtabdichtungsmittel oder Steinschlagschutzmassen eingesetzt werden. Diese neueren Beschichtungsmassen auf der Basis von 1K- oder 2K-Systemen basieren überwiegend auf Polyurethan- und/oder Alkydharzen und sind entweder lösungsmittelhaltig oder lösungsmittelfrei. Sie härten entweder bei Raumtemperatur oder bei erhöhten Temperaturen. Beispiele für derartige Beschichtungsmassen sind die in der DE-OS 31 08 861, DE-OS 32 28 723, DE-OS 32 28 724, DE-OS 32 28 670, DE-OS 33 37 394 und DE-OS 33 37 395 beschriebenen Zusammensetzungen.

Die nachfolgende Tabelle liefert eine Übersicht über die gegenwärtig bekannten lösungsmittelhaltigen und lösungsmittelfreien 1K- und 2K-Beschichtungsmassen-Systeme auf der Basis von Alkydharzen und Polyurethanharzen sowie deren Anwendung und Härtungsbedingungen.

Tabelle 1

| System | Basis | lmh/lmf | Anwendung | Härtungsbedingungen<br>RT (= Raumtemperatur)<br>HT (= Hochtemperatur) |
|---|---|---|---|---|
| 1K | Alkydharz | lmh | UBS | RT |
| 1K | PUR | lmf | UBS | HT (140-160°C) |
| 1K | PUR | lmf | NA | HT (100°C) |
| 2K | PUR | lmh | SSS | RT |
| 2K | PUR | lmf | UBS/SSS | RT |

UBS = Unterbodenschutz

NA = Nahtabdichtung

SSS = Stein-Schlag-Schutz

lmh = lösungsmittelhaltig

lmf = lösungsmittelfrei

Wenn also nach bisherigem Stand der Technik 1K-Systeme zum Einsatz kommen, sind sie entweder lösungsmittelhaltig und bei Raumtemperatur härtend oder sie sind lösungsmittelfrei und müssen dann bei erhöhten Temperaturen (> 100° C) gehärtet werden.

Die 2K-Systeme, die zum Einsatz kommen, sind entweder lösungsmittelhaltig oder lösungsmittelfrei und in jedem Falle bei Raumtemperatur härtend, weisen aber stets eine begrenzte Topfzeit ("pot life") auf.

Diesen herkömmlichen Beschichtungsmassen haftet insbesondere bei Verwendung als Unterbodenschutzmasse, Nahtabdichtungsmittel und Steinschlagschutzmasse der Nachteil an, daß sie wegen der regelmäßig erforderlichen Airless-Spritzbarkeit flüchtige toxische und/oder brennbare Lösungsmittel als Verdünner enthalten müssen. Dies gilt insbesondere für einkomponentige Systeme. Dementsprechend enthalten diese herkömmlichen Beschichtungsmassen in mehr oder weniger großen Anteilen Lösungsmittel wie z.B. aliphatische oder aromatische Kohlenwasserstoffe, Ester, Ketone usw.

Der Erfindung liegt deshalb die Aufgabe zugrunde, eine Zusammensetzung auf Polyurethanbasis zu - schaffen, die airless- und druckluftspritzbar sowie bei Raumtemperatur und erforderlichenfalls auch bei erhöhten Temperaturen härtbar ist und darüber hinaus den aus Umweltschutzgründen großen Vorteil bietet, daß sie lösungsmittelfrei ist.

Zur Lösung dieser Aufgabe wird eine flüssige, lösungsmittelfreie, airless- und druckluftspritzbare, härtbare Polyurethan-Öl-Weichmacher-Einkomponenten-Zusammensetzung der in Patentanspruch 1 gekennzeichneten Art vorgeschlagen. Gegenstand der Erfindung sind ferner ein Verfahren zur Herstellung der erfindungsgemäßen Zusammensetzung und die Verwendung der erfindungsgemäßen Zusammensetzung als Beschichtungsmasse. Bevorzugte Ausführungsformen der Erfindung ergeben sich aus der nachfolgenden Beschreibung und den Unteransprüchen.

Erfindungsgemäß wurde überraschend gefunden, daß man bei Zusammensetzungen auf Basis von Polyurethan-Präpolymeren eine permanente Plastifizierung und die in der Praxis so erwünschte Airless-Spritzbarkeit durch Zusatz von trocknenden und halbtrocknenden Ölen sowie geeigneten ausgewählten polyurethan-verträglichen Weichmachern erreichen kann. Ferner hat sich überraschend herausgestellt, daß man durch Zusatz von Beschleunigern sowohl die Kalthärtung des Polyurethanpräpolymeren als auch des trocknenden oder halbtrocknenden Öls erheblich beschleunigen kann. Damit liefert die Erfindung insbesondere den Automobilfirmen eine Alternative zu dem bisher verwendeten toxischen und/oder brennbaren Bitumen-Wachs- oder Wachs-Systemen und gestattet ihnen den Übergang auf unbrennbare, aber dennoch

airless- und druckluftspritzbare Beschichtungsmassen-Systeme. Darüber hinaus können die erfindungsgemäßen Zusammensetzungen auch die halogenhaltigen PVC-Plastisole und die ebenfalls thermoplastischen Polyacrylat-Plastisole, die für Unterbodenschutzmassen, Nahtabdichtungsmittel und Steinschlagschutzmassen verwendet werden, ersetzen. Ein weiteres bevorzugtes Einsatzgebiet der erfindungsgemäßen Zusammensetzungen liegt im Dachbereich als sogenannte "roofing"-Folie.

Ein wichtiges Merkmal der erfindungsgemäßen Zusammensetzung besteht darin, daß sie kalthärtend sind, aber selbstverständlich auch bei erhöhten Temperaturen gehärtet werden können, so daß sie für die praktische Anwendung eine große Flexibilität liefern. Die mit den erfindungsgemäßen Zusammensetzungen hergestellten Beschichtungen sind abriebfest und überlackierbar und können so hergestellt werden, daß sie auch schalldämpfende Eigenschaften aufweisen.

Als Polyurethanpräpolymer eignen sich die für Präpolymer-Anwendungen bekannten Polyether- und/oder Polyesterurethanpräpolymeren. Vorzugsweise werden Diol-Diisocyanat-Präpolymere und insbesondere Polyetherdiol-Diisocyanat-Präpolymere eingesetzt, die durch Reaktion von überschüssigem Diisocyanat mit Polyethern hergestellt werden. Besonders bevorzugt ist Polypropylenglykoldiol-diphenylmethan-4,4′-Diisocyanat-Präpolymer (PPG-MDI-Präpolymer). Die bevorzugten Polyetherdiol-diisocyanate werden aus Polyetherdiolen wie Polypropylenglykol mit einem Molekulargewicht zwischen 1000 und 3000 und vorzugsweise um 2000 und insbesondere Diphenylmethan-4,4′-diisocyanat hergestellt. Sie besitzen einen NCO-Wert zwischen 5 und 15% und eine Ausgangsviskosität von etwa 10000 mPa.s und zeigen eine einwandfreie Verträglichkeit mit BUFC-Harz. Für die erfindungsgemäßen Zwecke geeignete Polyesterurethanpräpolymere sind beispielsweise Dicarbonsäureester-Diol-Diisocyanat-Präpolymere. Insbesondere sind hier Adipinsäureester-Diol-Diphenylmethan-4,4′-Diisocyanat-Präpolymere zu nennen.

Das Polyurethanpräpolymer wird zum Zwecke der permanenten Plastifizierung und zur Erreichung der Airless-Spritzbarkeit mit einem trocknenden oder halbtrocknenden Öl, vorzugsweise einem Isolen- und/oder Konjuenöl vermischt. Unter trocknenden und halbtrocknenden Ölen versteht man fette Öle, die in dünner Schicht an der Luft "trocknen", wobei diese Eigenschaft bei den halbtrocknenden Ölen schwächer ausgeprägt ist. Der Vorgang des "Trocknens" geht auf die Einwirkung von Luftsauerstoff unter Molekülvergrößerung zurück und führt zur Ausbildung eines Films (oxidative Härtung). Beispiele für erfindungsgemäß geeignete Öle sind u.a. Leinöl, Perillaöl, Safloröl, Mohnöl, Sojaöl, Hanföl, Fischöl, Holzöl,Oiticiaöl und Ricinusöl. Trocknende Öle und halbtrocknende Öle sind dem Fachmann bekannt und außerdem in der Literatur ausführlich beschrieben (z.B. Ullmann's Enzyklopädie der technischen Chemie, 17. Bd., 1966, Seite 694ff), so daß weitere Erläuterungen nicht erforderlich sind. Trocknendes und/oder halbtrocknendes Öl wird in einer solchen Menge verwendet, daß das Gewichtverhältnis von Polyurethanpräpolymer zu Öl 100:10 bis 100:80 und vorzugsweise 100:20 bis 100:70 beträgt.

Das so durch Vermischen bei Raumtemperatur hergestellte Polyurethanpräpolymer-Öl-Gemisch wird dann mit einem geeigneten Weichmacher verdünnt, so daß mit Sicherheit eine lösungsmittelfreie Airless-Spritzbarkeit erreicht wird. Als besonders geeigneter Weichmacher für die erfindungsgemäßen Zwecke hat sich 1-Methyl-2,3-dibenzylbenzol (2,3-Dibenzyltoluol) entsprechend der folgenden Formel:

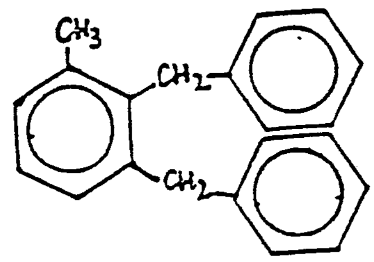

erwiesen.

Sehr geeignet sind auch polyurethanverträgliche Phthalsäureester-Weichmacher mit der folgenden Formel:

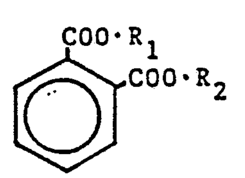

in der $R_1$ und $R_2$ gleiche oder verschiedene aliphatische oder aromatische Reste mit 1 bis 8 Kohlenstoffatomen sind. In der Praxis hat sich z.B. Benzylbutylphthalat ($R_1$ = Benzylrest und $R_2$ = Butylrest) bewährt.

Außer reinem Polyurethanpräpolymer kann man auch Mischungen mit öligem oder weichharzartigem Butylurethanformaldehyd-Carbamidsäureesterharz (kurz: BUFC-Harz) mit analoger Viskosität verwenden. Letzteres kann zusätzlich zum Polyurethanpräpolymer vorhanden sein oder 10 bis 50 Gew.% des Polyurethanpräpolymeren ersetzen. Die Verwendung des BUFC-Harzes, das mit Diol-Diisocyanat-Präpolymeren wie z.B. Polypropylenglykoldiol-Diphenylmethan-4,4′-Diisocyanat-Polyaddukten (kurz: PPG-MDI-Präpolymere) sehr gut verträglich ist, dient der Erreichung bzw. Intensivierung besonderer Effekte wie beispielsweise Glanz, Füllgrad, Haftung, Transparenz, Tieftemperaturflexibilität und Verträglichkeit. Es handelt sich hierbei um ein im Handel erhältliches Polykondensationsprodukt von Carbamidsäurebutylester mit Formaldehyd, welches folgende sich wiederholende Segmente aufweist:

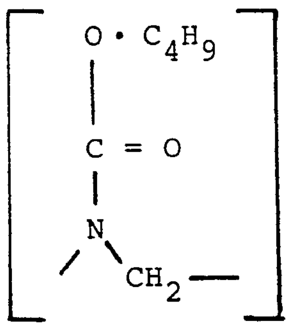

Der so hergestellten Zusammensetzung, die in der Praxis auch als Bindemittel bezeichnet wird, können dann je nach vorgesehenem Anwendungszweck und gewünschten Eigenschaften übliche Zusätze zugesetzt werden. Insbesondere sind hier zu nennen Haftvermittler wie z.B. Fest- oder Flüssigharze auf Kohlenwasserstoff- oder Abietinsäure-Basis und bifunktionelle Silane, Thixotropiemittel wie z.B. pyrogene Kieselsäuren mit einer BET-Oberfläche von mehr als 130 $m^2/g$ (hydrophil oder hydrophob), Trocknungsmittel (Wasserfänger) wie z.B. Molekularsiebe und Zeolithe, Pigmente und Farbstoffe wie z.B. Zinkstaub, Eisenoxid-Farben, Ruße und Titandioxid, Füllstoffe wie z.B. natürliche und/oder gefällte Calciumcarbonate und Spate wie Leichtspate (z.B. Calciumsulfat) oder Schwerspate(z.B. Bariumsulfat), Geliermittel wie z.B. Polyacrylatpulver und Korrosionsschutzmittel wie z.B. Inhibitoren und Metallpulver. Werden bestimmte Abbindeeffekte oder bestimmte Viskositätseinstellungen angestrebt, so können den lösungsmittelfreien erfindungsgemäßen Zusammensetzungen kleinere Mengen (weniger als 10 Gew.%, z.B. 3 bis 7 Gew.%) eines geeigneten Lösungsmittels zugesetzt werden.

Ganz allgemein können in den erfindungsgemäßen Zusammensetzungen übliche Zusätze in stark variierenden Mengen eingesetzt werden. Es muß allerdings immer darauf geachtet werden, daß die gewünschte Airless- und Druckluftspritzbarkeit unter allen Umständen erhalten bleibt. Dementsprechend sollte der Anteil der üblichen Zusätze an der Gesamtzusammensetzung 50 Gew.% nicht überschreiten. Bevorzugt sind Anteile im Bereich von 10 bis 40 Gew.%. Da es sich bei der Einverleibung von Zusätzen in die erfindungsgemäßen Zusammensetzungen nur um einen Gegebenenfalls-Maßnahme handelt, kann auf derartige Zusätze selbstverständlich in bestimmten Fällen auch völlig verzichtet werden.

In einer bevorzugten Ausführungsform wird der erfindungsgemäßen Zusammensetzung eine kleine Menge eines Stabilisators zugesetzt, um möglicherweise durch die übrigen Bestandteile vorhandene, gegenüber dem Polyurethanpräpolymer reaktive Gruppen oder auch Feuchtigkeitsreste, die die Lagerstabilität des Systems beeinträchtigen könnten, zu neutralisieren. Geeignete Stabilisatoren sind beispielsweise Säurechloride wie Benzoylchlorid. Ferner kann man als Stabilisator eine kleine Menge (etwa 1 bis 5%, vorzugsweise etwa 3%) Diphenylmethan-4,4′-Diisocyanat verwenden, wobei im Handel erhältliche Produkte mit oligomeren oder polymeren Anteilen (Poly-MDI) mit einem NCO-Gehalt zwischen 30 und 32% verwendet werden können.

Weiterhin ist es erfindunsgemäß bevorzugt, der Zusammensetzung einen Beschleuniger zuzusetzen. Derartige Beschleuniger sind dem Fachmann geläufig. Als geeignete Beispiele seien Triethylendiamin, Dibutylzinndilaurat, Co-Pb-Mn-Naphthenate und -Octoate genannt. Überraschenderweise wird durch die Verwendung von Beschleunigern sowohl die Luftfeuchtigkeitshärtung des Polyurethanpräpolymeren als auch die oxidative Trocknung des Öls beschleunigt. Während beispielsweise Leinöl ohne Verwendung eines Beschleunigers eine Trocknungszeit von etwa 24 Stunden aufweist, verkürzt sich diese in den erfindungsgemäßen Zusammensetzungen bei Verwendung eines Beschleunigers auf etwa 2 bis 4 Stunden.

Ferner ist es grundsätzlich möglich, die erfindungsgemäßen Zusammensetzungen durch Zusatz von etwa 5 bis 15 Gew.% (bezogen auf 100 Gew.% der erfindungsgemäßen Zusammensetzungen) eines hochreaktiven, flüssigen Verschäumungsmittels zu einem offenzelligen Schaum mit geschlossener Außenhaut zu verarbeiten. Als Verschäumungsmittel eignen sich insbesondere Gemische aus Polypropylenglykol, Tensid, Triethylendiamin und ggf. Wasser. Zwei typische Zusammensetzungen für geeignete Verschäumungsmittel sind im folgenden angegeben:

| | | |
|---|---|---|
| Polypropylenglykol (NCO-Fänger) | 25% | 33% |
| Tensid (Schaumlamellenbildner) | 25% | 33% |
| Triethylendiamin (Schockhärtung) | 25% | 34% |
| Wasser | 25% | - |
| | 100% | 100% |

Das Verschäumungsmittel wird mit Hilfe eines hochtourigen Mischaggregats sehr schnell untergemischt (Mischdauer weniger als 30 sec.). Der Schaum treibt dann innerhalb von 30 sec. bis 2 Min. auf und härtet in dieser Zeit oberflächlich aus. Das Aufschäumvolumen liegt bei etwa 400 Vol.%, ohne daß irgendwelche zusätzlichen Treibgase wie Fluorchlorkohlenwasserstoffe oder ähnliche eingesetzt werden müssen.

Die aufgeschäumten erfindungsgemäßen Zusammensetzungen sind sehr gute Materialien für die Körperschalldämpfung. Diese Eigenschaften des aufgeschäumten Materials lassen sich universell nutzen, z.B. im Karosseriebau/Türen, bei den Trapez-Dachblechen usw. Die Kälte-/Wärme-Beständigkeit eines solchen aufgeschäumten erfindungsgemäßen Materials liegt bei -40 °C/+200 °C, also in einem sehr breiten Temperaturbereich.

Wie die obigen Ausführungen zeigen, können die Eigenschaften der erfindungsgemäßen Zusammensetzungen durch Variation bzw. gezielten Einsatz der üblichen Zusätze, Stabilisatoren und Beschleuniger verändert bzw. gesteuert werden. So kann man die bereits erwähnten schalldämpfenden Eigenschaften beispielsweise dadurch beeinflussen, daß man weitestgehend auf Trocknungsmittel (Wasserfänger) oder Beschleuniger (z.B. Molekularsiebe, Diamine usw.) verzichtet und dadurch das Ausmaß der Entwicklung der Schaumschicht beeinflußt. Diese Variationsmöglichkeit, die im Stand der Technik nicht möglich war, und andere Variationsmöglichkeiten liegen für den Fachmann auf der Hand und bedürfen keiner weiteren Erläuterung.

Die Herstellung der erfindungsgemäßen Zusammensetzung erfolgt durch Vermischung der Komponenten in herkömmlicher Weise, vorzugsweise bei Raumtemperatur. So können übliche Rührgefäße mit Rührern eingesetzt werden. Um den erforderlichen Feuchtigkeitsausschluß sicherzustellen, kann unter einer Inertgasatmosphäre oder unter Vakuum gearbeitet werden. Hierfür geeignete Mischvorrichtungen gehören ebenfalls zum Stand der Technik. Die Lagerung der erfindungsgemäßen Zusammensetzungen erfolgt unter Verschluß (Luftabschluß). Unter diesen Bedingungen können die erfindungsgemäßen Zusammensetzungen monatelang gelagert werden.

Die erfindungsgemäßen Zusammensetzungen ergeben kälteflexible und halogenfreie Beschichtungsmassen, die sich vorzugsweise für Unterbodenschutzschichten, Nahtabdichtungsmittel und Steinschlagschutzschichten eignen. Sie sind frei von toxischen und/oder brennbaren Lösungsmitteln und Halogenen und demzufolge wesentlich umweltfreundlicher als vergleichbare lösungsmittelhaltige Beschichtungsmassen des Standes der Technik.

Das wesentliche Merkmal der erfindungsgemäßen Zusammensetzungen besteht in der gleichzeitigen Lösungsmittelfreiheit und Airless- bzw. Druckluftspritzbarkeit. Um dies zu erreichen, ist eine ausreichend niedrige Spritzviskosität ($\eta$) bei einer gleichzeitig hohen Fließgrenze ($\tau$) erforderlich. Die meisten der bis jetzt bekannten Beschichtungsmassen auf der Basis von Alkydharz- und/oder Polyurethan-Systemen haben eine systembedingte innere Zähigkeit, die ohne größere Lösungsmittelzusätze eine Airless- und Druckluftspritzbarkeit nicht erlaubt. Demgegenüber weisen die erfindungsgemäßen Zusammensetzungen eine Viskosität im Bereich von 500 bis 2500 mPa.s und vorzugsweise 800 bis 2000 mPa.s auf, wobei ihre Fließgrenze im Bereich von 10 bis 100 Pa und vorzugsweise 20 bis 50 Pa liegt. Die Bestimmung der Viskosität($\eta$) und und der Fließgrenze bzw. Schubspanung ($\tau$) eines strukturviskosen, also nicht - newton'schen Systems erfolgt üblicherweise nach nach DIN 13342 einschließlich der dazugehörigen Ergänzungen und Verweisungen, wonach die Viskosität ($\eta$) eines solchen Systems der Quotient aus Schubspannung ($\tau$) und Geschwindigkeitsgefälle (D) gemäß der Gleichung

$$\eta = \frac{\tau}{D}$$

ist. Die Bestimmung der Viskositäten und Fließgrenzen erfolgt üblicherweise in einem Viskosimeter, das nach dem Rotationsprinzip (sog. Rheomat) arbeitet.

Alle erfindungsgemäß verwendeten Bestandteile sind im Handel erhältlich, so daß auf ihre Herstellung nicht näher eingegangen zu werden braucht. Die erfindungsgemäß verwendeten trocknenden oder halb trocknenden Öle werden im Handel häufig bereits mit Sikkativ angeboten. Derartige sikkativierte Öle werden erfindungsgemäß bevorzugt eingesetzt.

Beispiele 1 bis 10

In den folgenden Tabellen 2 und 3 sind die Rezepturen verschiedener erfindungsgemäßer Zusammensetzungen und deren Eigenschaften angegeben. Bei den Zusammensetzungen in Tabelle 2 handelt es sich um lösungsmittelfreie, airless-spritzbare Bindemittel, während Tabelle 3 auf Basis dieser Bindemittel hergestellte lösungsmittelfreie, airless-spritzbare Beschichtungsmassen für den Unterbodenschutz, als Nahtabdichtungsmittel und als Steinschlagschutzmassen betrifft.

Tabelle 2

Beispiele 1 bis 5

| Bestandteile | 1 | 2 | 3 | 4 | 5 |
|---|---|---|---|---|---|
| | Gew.% | Gew.% | Gew.% | Gew.% | Gew.% |
| 1. PPG-MDI-Präpolymer | | | | | |
| (Visc. ca. 10000 mPa.s (NCO: ~13%) | 40.0 | 40.0 | 50.0 | 50.0 | 50.0 |
| 2. BUFC-Weichharz | - | 10.0 | - | - | - |
| 3. Öl, trocknend | | | | | |
| (Leinöl, sikkativiert) | 25.0 | 15.0 | 10.0 | 15.0 | 20.0 |
| 4. Weichmacher | | | | | |
| (2,3-Dibenzyltoluol) | 35.0 | 35.0 | 40.0 | 35.0 | 30.0 |
| | 100.0 | 100.0 | 100.0 | 100.0 | 100.0 |
| Viskosität mPa.s | 700-900 | 1000-1200 | 800-1000 | 1000-1300 | 1000-1300 |
| Polyurethan : Öl | 100:62,5 | 100:37,5 | 100:20 | 100:30 | 100:40 |
| Trockenzeit: h | 6-8 | 6-8 | 6-8 | 6-8 | 6-8 |
| Reaktions-Beschleunigung | | | | | |
| | 1 2 | 1 2 | 1 2 | 1 2 | 1 2 |
| + Triethylendiamin (Gew.%) | 0.5 | 0.5 | 0.5 | 0.5 | 0.5 |
| + Dibutylzinndilaurat (Gew.%) | 0.1 | 0.1 | 0.1 | 0.1 | 0.1 |
| Trockenzeit: h | 2 - 3 | 2 - 3 | 2 - 3 | 2 - 3 | 2 - 3 |

## Tabelle 3

### Beispiele 6 - 10

| Bestandteile | 6<br>Farbe: grau | 7<br>Farbe: schwarz | 8<br>Farbe: beige | 9<br>Farbe: rot | 10<br>Farbe:schwarz |
|---|---|---|---|---|---|
| Beispiele 1 - 5 | 75.0% | 75.0% | 75.0% | 75.0% | 75.0% |
| Pyrogene Kieselsäure | 2.0% | 2.0% | 2.0% | 2.0% | 2.0% |
| Molekularsieb, 3 Å | 0.5% | 0.5% | 0.5% | 0.5% | 0.5% |
| Schwerspat | - | 21.0% | 21.0% | 21.0% | 21.0% |
| Pigmente | | | | | |
| Zinkstaub, 94% Zn. | 22.5% | - | - | - | - |
| Eisenoxidschwarz | - | 1.5% | - | - | - |
| Eisenoxidrot | - | - | - | 1.5% | - |
| Titandioxid-Rutil | - | - | 1.5% | - | - |
| Ofenruß | - | - | - | - | 1.5% |
| | 100.0% | 100.0% | 100.0% | 100.0% | 100.0% |
| Viskosität ($\eta$) m.Pa.s | 1500 - 1600 | 1500 - 1600 | 1500 - 1600 | 1500 - 1600 | 1500 - 1600 |
| Fließgrenze ($\tau$) Pa | 34 - 36 | 23 - 25 | 23 - 25 | 23 - 25 | 23 - 25 |
| Haftung auf | | | | | |
| Stahlblech, entfettet | i.O. | i.O. | i.O. | i.O. | i.O. |
| Stahlblech, KTL-behandelt | i.O. | i.O. | i.O. | i.O. | i.O. |

i.O. = in Ordnung

## Ansprüche

1. Flüssige, lösungsmittelfreie, airless- und druckluftspritzbare härtbare Polyurethan-Öl-Weichmacher-Einkomponenten-Zusammensetzung, gekennzeichnet durch

a) ein Polyether- und/oder Polyesterurethan-Präpolymer

b) trocknendes und/oder halbtrocknendes Öl,

c) Weichmacher,

d) gegebenenfalls übliche Zusätze wie Haftvermittler, Thixotropiemittel, Trocknungsmittel, Pigmente, Farbstoffe, Füllstoffe, Geliermittel und/oder Korrosionsschutzmittel,

e) ein Gewichtsverhältnis von Komponente a) zu Komponente b) im Bereich von 100:10 bis 100:80 und

f) eine Viskosität von 500 bis 2500 mPa.s und eine Fließgrenze im Bereich von 10 bis 100 Pa.

2. Zusammensetzung nach Anspruch 1, dadurch gekennzeichnet, daß der Weichmacher 2,3-Dibenzyltoluol oder ein polyurethanverträglicher Phthalsäureester, insbesondere Benzylbutylphthalat ist.

3. Zusammensetzung nach Anspruch 1 oder 2, dadurch gekennzeichnet, daß sie zusätzlich öliges oder weichharzartiges Butylurethan-Formaldehyd-Carbamidsäureesterharz enthält.

4. Zusammensetzung nach einem der Ansprüche 1 bis 3, dadurch gekennzeichnet, daß sie einen Stabilisator, vorzugsweise ein Säurechlorid, insbesondere Benzoylchlorid enthält.

5. Zusammensetzung nach einem der Ansprüche 1 bis 4, dadurch gekennzeichnet, daß das Polyurethanpräpolymer ein Diol-Diisocyanat-Präpolymer, insbesondere ein Polyetherdiol-Diisocyanat-Präpolymer ist.

6. Zusammensetzung nach Anspruch 5, dadurch gekennzeichnet, daß das Polyurethanpräpolymer ein Polypropylenglykoldiol-Diphenylmethan-4,4′-Diisocyanat-Präpolymer ist.

7. Zusammensetzung nach einem der Ansprüche 1 bis 6, dadurch gekennzeichnet, daß sie einen Beschleuniger, vorzugsweise Triethylendiamin, Dibutylzinndilaurat, Co-Pb-Mn-Napththenate oder -Octoate enthält.

8. Zusammensetzung nach einem der Ansprüche 1 bis 7, dadurch gekennzeichnet, daß das Öl ein Isolen- oder Konjuenöl ist.

9. Verfahren zur Herstellung von flüssigen, lösungsmittelfreien airless- und druckluftspritzbaren, härtbaren Polyurethan-Öl-Weichmacher-Einkomponentenzusammensetzungen gemäß den Ansprüchen 1 bis 8, dadurch gekennzeichnet, daß man

a) ein Polyether- und/oder Polyesterurethanpräpolymer mit einem trocknenden oder halbtrocknenden Öl in einem Gewichtsverhältnis von 100:10 bis 100:80 vermischt,

b) das so hergestellte Gemisch mit Weichmacher auf die für das Airless-Spritzen geeignete Viskosität verdünnt und gegebenenfalls

c) in das so hergestellte Bindemittel übliche Zusätze einbringt.

10. Verfahren nach Anspruch 9, dadurch gekennzeichnet, daß man das Polyether- und/oder Polyesterurethanpräpolymer vor dem Vermischen mit dem trocknenden oder halbtrocknenden Öl mit einem öligen oder weichharzartigen Butylurethan-Formaldehyd-Carbamidsäureesterharz versetzt.

11. Verfahren nach Anspruch 9 oder 10, dadurch gekennzeichnet, daß man vor, während oder nach den Stufen a) und b) einen Stabilisator und/oder einen Beschleuniger zusetzt.

12. Verwendung der Zusammensetzungen gemäß den Ansprüchen 1 bis 8 oder hergestellt nach dem Verfahren gemäß den Ansprüchen 9 bis 11 als Beschichtungsmasse, vorzugsweise Unterbodenschutzmasse, Nahtabdichtungsmittel und Steinschlagschutzmasse, als Beschichtungsmaterial für den Dachbereich oder zur Herstellung von schalldämpfenden Schaumstoffen.

13. Verwendung nach Anspruch 12, dadurch gekennzeichnet, daß man den Zusammensetzungen kurz vor der Verarbeitung ein Verschäumungsmittel in einer Menge von bis zu 15 Gew.% (bezogen auf 100 Gew.% der Zusammensetzungen), insbesondere eine Mischung aus Polypropylenglykol, Tensid, Triethylendiamin und gegebenenfalls Wasser zusetzt.